# EUROPEAN PATENT APPLICATION

(11) **EP 3 222 956 A1**
(43) Date of publication of application: **27.09.2017**
(21) Application number: 17160495.2
(22) Date of filing: 13.03.2017
(51) Int. Cl.: F28F 7/02

(54) **HEAT EXCHANGERS**

(30) Priority: 24.03.2016 US 201615079773
(71) Applicant: Hamilton Sundstrand Corporation, Windsor Locks, CT 06096-1010 (US)
(72) Inventor: KUCZEK, Andrzej E., Bristol, CT 06010 (US); RANJAN, Ram, New Britain, CT 06053 (US); ST. ROCK, Brian, Andover, CT 06232 (US); IKEDA, Michael K., West Hartford, CT 06117 (US)
(74) Representative: Bridge, Kerry Ann

(57) **Abstract**

A heat exchanger (100) includes a body (101), a plurality of first flow channels (103) defined in the body (101), and a plurality of second flow channels (105) defined in the body (101). The second flow channels (105) are fluidly isolated from the first flow channels. At least two of the second flow channels are adjacent each other and are separated from each other by at least one common fin (104), wherein the at least one common fin (104) includes an opening defined therein for permitting flow between the adjacent second flow channels (105).

## Description

### BACKGROUND

### 1. Field

The present disclosure relates to heat exchangers, more specifically to more thermally efficient heat exchangers.

### 2. Description of Related Art

Certain heat exchangers include segregated cold flow channels. Different pressures can develop between segregated cold channels which lead to a pressure maldistribution which can cause an inefficiency.

Such conventional methods and systems have generally been considered satisfactory for their intended purpose. However, there is still a need in the art for improved heat exchangers. The present disclosure provides a solution for this need.

### SUMMARY

A heat exchanger includes a body, a plurality of first flow channels defined in the body, and a plurality of second flow channels defined in the body. The second flow channels are fluidly isolated from the first flow channels. At least two of the second flow channels are adjacent each other and are separated from each other by at least one common fin, wherein the at least one common fin includes an opening defined therein for permitting flow between the adjacent second flow channels.

The opening can be the length of the at least one common fin between the first flow channels. The at least one common fin can be located in a core of the heat exchanger for counteracting pressure maldistribution therein.

The at least one common fin can include a plurality of openings along the flow direction of the common fin. The plurality of openings can include a changing characteristic from one another along the flow direction. The changing characteristic of the openings can include changing flow area size and/or shape.

A method for manufacturing a heat exchanger includes forming a body to include a plurality of first flow channels and a plurality of second flow channels such that the second flow channels are fluidly isolated from the first flow channels, and such that at least two of the second flow channels are adjacent each other and are separated from each other by at least one common fin, wherein the at least one common fin includes an opening defined therein for permitting flow between the adjacent second flow channels. Forming the heat exchanger can include additively manufacturing the heat exchanger.

Additively manufacturing the heat exchanger can include monolithically forming the at least one common fin to include a plurality of openings. Monolithically forming the at least one common fin can include forming the plurality of openings to include a changing characteristic from one another along the flow direction.

These and other features of the systems and methods of the subject disclosure will become more readily apparent to those skilled in the art from the following detailed description taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, embodiments thereof will be described in detail herein below with reference to certain figures, wherein:
Fig. 1A is a perspective view of an embodiment of a heat exchanger in accordance with this disclosure, showing a hot flow inlet/cold flow outlet of the heat exchanger;
Fig. 1B is a partial perspective view of a portion of an embodiment of a heat exchanger in accordance with this disclosure;
Fig. 1C is a perspective cross-sectional view of the heat exchanger of Fig. 1A, showing a middle portion of the heat exchanger;
Fig. 1D is a perspective cross-sectional view of the heat exchanger of Fig. 1A, showing a hot flow outlet/cold flow inlet of the heat exchanger; and
Fig. 2 is a partial perspective view of a portion of an embodiment of a heat exchanger in accordance with this disclosure.

### DETAILED DESCRIPTION

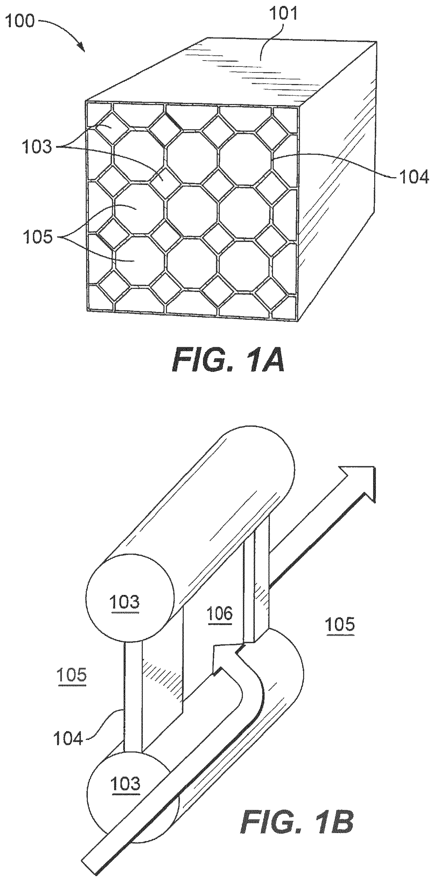

Reference will now be made to the drawings wherein like reference numerals identify similar structural features or aspects of the subject disclosure. For purposes of explanation and illustration, and not limitation, an illustrative view of an embodiment of a heat exchanger in accordance with the disclosure is shown in Fig. 1A and is designated generally by reference character 100. Other embodiments and/or aspects of this disclosure are shown in Figs. 1B-2. The systems and methods described herein can be used to reduce weight and/or increase performance of heat transfer systems.

Referring to Fig. 1A, a heat exchanger 100 can include a body 101, a plurality of first flow channels (e.g., hot flow channels 103 as described herein) defined in the body 101, and a plurality of second flow channels (e.g., cold flow channels 105 as described herein) defined in the body 101. While hot flow channels 103 and the cold flow channels 105 are described with respect to a relative temperature of flow therein, it is contemplated that the hot flow channels 103 can be used for cold flow and vice versa, or any other suitable arrangement. The body 101 can be made of metal and/or any other suitable material.

The cold flow channels 105 are fluidly isolated from the hot flow channels 103. Referring additionally to Fig. 1B, at least two of the cold flow channels 105 are adjacent each other and are separated from each other by at least one common fin 104. The at least one common fin 104 includes an opening 106 defined therein for permitting flow between the adjacent second flow channels 105. While common fin 104 is shown as part of the embodiment of a heat exchanger 100 as described above, it is contemplated that the common fin 104 having an opening 106 can be applied to any suitable heat exchanger design having any suitable cold channels (e.g., plate fin construction or any other suitable design).

As shown, the opening 106 can be the length of the at least one common fin 104 between the first flow channels 103, however, less than this length is contemplated herein. Any other suitable dimensions for the opening 106 are contemplated herein (e.g., a pin hole). The opening 106 can also have any suitable cross-sectional shape (e.g., square, round, polygonal, curved). It is also contemplated that a fin thickness where the opening 106 is defined of the fin 104 could be beveled to reduce drag/pressure drop.

The at least one common fin 104 can be located in a core of the heat exchanger 100 for counteracting pressure maldistribution therein. Pressure maldistribution can be amplified in the core in certain circumstances. However, it is contemplated that the at least one common fin 104 can be located in any suitable portion of the heat exchanger 100. For example, any suitable number of fins 104 with openings 106 can be included in the heat exchanger 100 (e.g., all fins 104 can include an opening 106).

In certain embodiments, one or more common fins 104 can include a plurality of openings 106 along the flow direction of the common fin 104 or in any other suitable array/distribution. In certain embodiments, the plurality of openings 106 can include a changing characteristic from one another along the flow direction. For example, the changing characteristic of the openings 106 can include changing flow area size and/or shape of the openings 106.

In certain embodiments, at least one of the hot flow channels 103 or the cold flow channels 105 can have a changing characteristic along a direction of flow within the hot flow channels or the cold flow channels 101. It is contemplated, however, that the flow channels 103, 105 can be constant along a flow direction thereof.

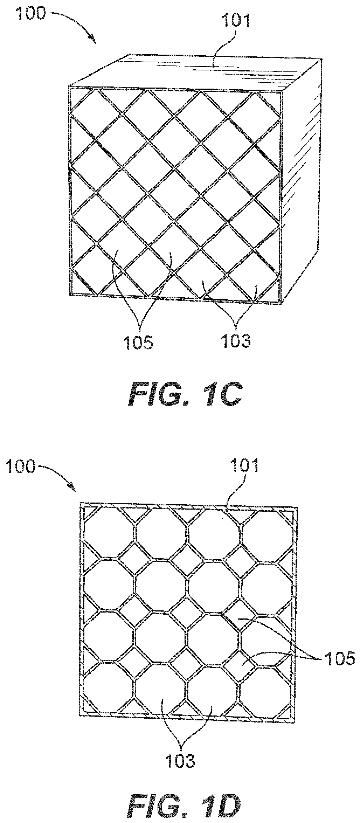

As shown in Figs. 1A, 1C, and 1D, the changing characteristic of the hot and/or cold flow channels 103, 105 can include a changing flow area. For example, the changing flow area can increase a hot flow area toward a hot flow outlet of the heat exchanger 100 (e.g., as shown in transitioning from Fig. 1A, to Fig. 1C, to Fig. 1D). Similarly, the changing flow area can decrease a cold flow area toward the hot flow outlet as the hot flow area increases (which may be a function of the increasing hot flow area in order to maintain total area of the body 101). It is contemplated that one or more of the hot flow channels 103 or the cold flow channels 105 may maintain a constant flow area or change in any other suitable manner.

In certain embodiments, the changing characteristic of the hot and/or cold flow channels 103/105 can include a changing flow area shape. In certain embodiments, the changing flow area shape can include a first polygonal flow area at a hot flow inlet (e.g., a diamond as shown in Figs. 1A and 1C) which transitions to a second polygonal flow area having more sides at a hot flow outlet (e.g., a hexagon as shown in Fig. 3). Also as shown, the changing flow area shape can include a first polygonal flow area at a cold flow inlet (e.g., a diamond as shown in Figs. 1D and 1 C) which transitions to a second polygonal flow area having more sides at a cold flow outlet (e.g., a hexagon as shown in Fig. 1A).

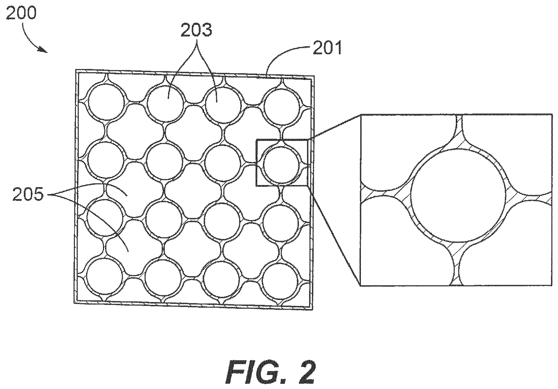

Any other suitable flow area shapes for the hot flow channels 103 and/or the cold flow channels 105 are contemplated herein. For example, referring to Fig. 2, a heat exchanger 200 can include a body 201 defining elliptical hot flow channels 203 and non-elliptical cold flow channels 205. Channels 203, 205 can include one or more changing characteristics as described hereinabove and/or described below.

It is contemplated that a heat exchanger 100, 200, 300 can include any suitable header (not shown) configured to connect the hot flow channels 103 to a hot flow source (not shown) while isolating the hot flow channels 103 from the cold flow channels 105. The header may be formed monolithically with the core of the heat exchanger 100, 200, 300, or otherwise suitable attached to cause the hot flow channels 103 to converge together and/or to cause the cold flow channels 105 to converge together.

A method for manufacturing a heat exchanger includes forming a body to include a plurality of first flow channels and a plurality of second flow channels such that the second flow channels are fluidly isolated from the first flow channels, and such that at least two of the second flow channels are adjacent each other and are separated from each other by at least one common fin, wherein the at least one common fin includes an opening defined therein for permitting flow between the adjacent second flow channels. Forming the heat exchanger can include additively manufacturing the heat exchanger.

Additively manufacturing the heat exchanger can include monolithically forming the at least one common fin to include a plurality of openings. Monolithically forming the at least one common fin can include forming the plurality of openings to include a changing characteristic from one another along the flow direction.

Embodiments as described above allow for enhanced control of flow therethrough, a reduction of pressure drop, control of thermal stresses, easier integration with a system, and reduced volume and weight. Unlike conventional multi-layer sandwich cores, embodiments as described above allow for channel size adjustment for better flow impedance match across the core. For example, embodiments allow pressure balancing via one or more openings 106 in at least one fin 104 to counteract pressure maldistribution between isolated flow channels 105.

Further, in additively manufactured embodiments, since the core is made out of a monolithic material, the material can be distributed to optimize heat exchange and minimize structural stresses, thus minimizing the weight. Bending stresses generated by high pressure difference between cold and hot side are greatly reduced by adjusting curvature of the walls and appropriately sized corner fillets. Such solution reduces weight, stress, and material usage since the material distribution can be optimized and since the material works in tension instead of bending.

The methods and systems of the present disclosure, as described above and shown in the drawings, provide for heat exchangers with superior properties including reduced weight and/or increased efficiency. While the apparatus and methods of the subject disclosure have been shown and described with reference to embodiments, those skilled in the art will readily appreciate that changes and/or modifications may be made thereto without departing from the spirit and scope of the subject disclosure.

## Claims

1. A heat exchanger (100), comprising:
a body (101);
a plurality of first flow channels (103) defined in the body (101); and
a plurality of second flow channels (105) defined in the body (101), the second flow channels (105) fluidly isolated from the first flow channels (103), wherein at least two of the second flow channels are adjacent each other and are separated from each other by at least one common fin (104), wherein the at least one common fin (104) includes an opening defined therein for permitting flow between the adjacent second flow channels (105).

2. The heat exchanger of claim 1, wherein the opening (106) is a length of the at least one common fin (104) between the first flow channels (103).

3. The heat exchanger of claim 1 or 2, wherein the at least one common fin (104) is located in a core of the heat exchanger (100) for counteracting pressure maldistribution therein.

4. The heat exchanger of claim 1, 2 or 3, wherein the at least one common fin (104) includes a plurality of openings along a flow direction of the common fin (104).

5. The heat exchanger of claim 4, wherein the plurality of openings (106) includes a changing characteristic from one another along the flow direction.

6. The heat exchanger of claim 5, wherein the changing characteristic of the openings includes changing flow area size and/or shape.

7. A method for manufacturing a heat exchanger, comprising;
forming a body (101) to include a plurality of first flow channels (103) and a plurality of second flow channels such that the second flow channels (105) are fluidly isolated from the first flow channels, and such that at least two of the second flow channels are adjacent each other and are separated from each other by at least one common fin (104), wherein the at least one common fin (104) includes an opening (106) defined therein for permitting flow between the adjacent second flow channels.

8. The method of claim 7, wherein forming the heat exchanger (100) includes additively manufacturing the heat exchanger.

9. The method of claim 8, wherein additively manufacturing the heat exchanger (100) includes monolithically forming the at least one common fin to include a plurality of openings (106).

10. The method of claim 9, wherein monolithically forming the at least one common fin (104) includes forming the plurality of openings (106) to include a changing characteristic from one another along the flow direction.
